(19) Europäisches Patentamt / European Patent Office / Office européen des brevets

(11) **EP 3 373 095 B1**

(12) **EUROPÄISCHE PATENTSCHRIFT**

(45) Veröffentlichungstag und Bekanntmachung des Hinweises auf die Patenterteilung:
**13.05.2020   Patentblatt 2020/20**

(51) Int Cl.:
**G05D 1/02** *(2020.01)*     **B62D 15/02** *(2006.01)*
**B60W 30/095** *(2012.01)*     **B60W 30/165** *(2020.01)*

(21) Anmeldenummer: **18159346.8**

(22) Anmeldetag: **01.03.2018**

(54) **VERFAHREN ZUR FOLGEREGELUNG IN QUERRICHTUNG EINES FAHRZEUGS INNERHALB EINES PLATOONS UND FAHRZEUG ZUR DURCHFÜHRUNG DES VERFAHRENS**

METHOD FOR SEQUENCE CONTROL IN THE TRAVERSE DIRECTION OF A VEHICLE WITHIN A PLATOON AND VEHICLE FOR CARRYING OUT THE METHOD

PROCÉDÉ DE RÉGLAGE DE SUIVI DANS LA DIRECTION TRANSVERSALE D'UN VÉHICULE À L'INTÉRIEUR D'UN PELOTON ET VÉHICULE DESTINÉ À LA MISE EN OEUVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2017   DE 102017002220**

(43) Veröffentlichungstag der Anmeldung:
**12.09.2018   Patentblatt 2018/37**

(73) Patentinhaber: **MAN Truck & Bus SE**
**80995 München (DE)**

(72) Erfinder:
• **Römersperger, Xaver**
**84034 Landshut (DE)**
• **Strauß, Peter**
**80801 München (DE)**
• **Jerg, Stefan**
**85737 Ismaning (DE)**
• **Schwertberger, Walter**
**82278 Althegnenberg (DE)**

(74) Vertreter: **Liebl, Thomas**
**Neubauer - Liebl - Bierschneider**
**Patentanwälte**
**Münchener Straße 49**
**85051 Ingolstadt (DE)**

(56) Entgegenhaltungen:
**DE-A1- 4 133 882     US-A1- 2010 049 374**

• FUJIOKA ET AL: "Vehicle following control in lateral direction for platooning", VEHICLE SYSTEM DYNAMICS: INTERNATIONAL JOURNAL OF VEHICLE MECHANICS AND MOBI, TAYLOR & FRANCIS, GB, Bd. 29, 1. Januar 1998 (1998-01-01), Seiten 422-437, XP009159285, ISSN: 0042-3114, DOI: 10.1080/00423119808969576
• Mani Amoozadeh ET AL: "Platoon management with cooperative adaptive cruise control enabled by VANET", Vehicular Communications, 1. April 2015 (2015-04-01), Seiten 110-123, XP055479897, DOI: 10.1016/j.vehcom.2015.03.004 Gefunden im Internet: URL:https://pdfs.semanticscholar.org/2286/3122dbe72530d6b7fa9a70be95622c0fd4f0.pdf [gefunden am 2018-06-04]
• SUN ZHENPING ET AL: "High-precision motion control method and practice for autonomous driving in complex off-road environments", 2016 IEEE INTELLIGENT VEHICLES SYMPOSIUM (IV), IEEE, 19. Juni 2016 (2016-06-19), Seiten 767-773, XP032939052, DOI: 10.1109/IVS.2016.7535474 [gefunden am 2016-08-05]

EP 3 373 095 B1

**Beschreibung**

Die Erfindung betrifft ein Verfahren zur Folgeregelung in Querrichtung eines Fahrzeugs innerhalb eines Platoons nach dem Oberbegriff des Anspruchs 1 sowie ein Fahrzeug zur Durchführung des Verfahrens nach dem Oberbegriff des Anspruchs 7.

Ein Platoon aus Fahrzeugen, insbesondere aus Nutzfahrzeugen besteht aus einem vorausfahrenden Führungsfahrzeug, das Geschwindigkeit und Richtung vorgibt, und einem oder mehreren, mit geringem Abstand folgenden Folgefahrzeugen, wobei sich ein Folgefahrzeug am jeweils vorausfahrenden Vorderfahrzeug orientiert.

Bei einem Platoon handelt es sich somit um eine Kolonnenfahrt von Fahrzeugen mit geringen Abständen von typischerweise ca. 10 Metern. Damit soll durch Windschattenfahren sowohl eine Kraftstoffeinsparung mit entsprechender Reduzierung der $CO_2$-Emission als auch eine effizientere Nutzung der Verkehrsinfrastruktur bei erhöhter Verkehrssicherheit erreicht werden.

Für einen lose gekoppelten, nicht spurgebundenen Zugverband von Fahrzeugen ist es bekannt (DE 101 09 052 A1) mit einer Fahrzeug-zu-Fahrzeug-Kommunikation mittels Anzeigevorrichtungen Informationen beispielsweise zur Überwachung benachbarter Fahrspuren oder die Notwendigkeit bevorstehender Spurwechsel auszutauschen. Ähnlich ist es bekannt (DE 10 2005 055 371) Fahrhinweise zu einer gemeinsam vereinbarten Route in Verbindung mit einer Kolonnenfahrt auf Sichtweite auszutauschen. Eine selbsttätige, fahrerunabhängige Querführung eines Folgefahrzeugs ist hier nicht vorgesehen.

Weiter ist es bekannt, durch eine Fahrzeug-zu-Fahrzeug-Kommunikation in einem FahrzeugVerband zusammengehörige Fahrzeuge eines Platoons zu erkennen und zuzuordnen (DE 10 2013 226 532 A1) und ein geregeltes Ausscheiden eines Fahrzeugs aus einem Zugverband vorzubereiten und durchzuführen (EP 0 762 364 B1).

Weiter ist es bekannt (DE 101 09 046 A1) Fahrzeuge in einem Platoon elektronisch mittels einer sogenannten elektronischen Deichsel zu koppeln, wobei sich ein Folgefahrzeug optisch an einem vorausfahrenden Vorderfahrzeug orientieren kann und diesen abstands- und quergeregelt spurgebunden und dicht folgt.

Während einer Platoon-Fahrt ist das Sichtfeld des Fahrers eines Folgefahrzeugs durch das Heck des Vorderfahrzeugs oder dessen Anhänger oder Auflieger aufgrund des geringen Abstands stark eingeschränkt. Bei der Führung eines Folgefahrzeugs durch dessen Fahrer wäre damit eine hohe psychische Belastung verbunden, welche durch eine automatisierte Fahrzeug-Querführung reduziert werden kann.

Aufgabe der Erfindung ist es daher, ein Verfahren zur Folgeregelung in Querrichtung eines Fahrzeugs mit einer selbsttätigen, dynamisch geregelten Querführung vorzuschlagen, sowie ein Fahrzeug zur Durchführung eines solchen Verfahrens.

Die Aufgabe wird mit den Merkmalen der unabhängigen Ansprüche gelöst. Vorteilhafte Ausgestaltungen sind Gegenstand der abhängigen Ansprüche.

Gemäß Anspruch 1 ist ein Verfahren zur Folgeregelung in Querrichtung eines Fahrzeugs für eine Fahrspurfolge eines Folgefahrzeugs innerhalb eines Platoons vorgesehen, mit einem vorausfahrenden Führungsfahrzeug, das Geschwindigkeit und Richtung vorgibt, und einem oder mehreren mit einem, vorzugsweise geringen, Abstand folgenden Folgefahrzeugen, wobei sich ein Folgefahrzeug am jeweils vorausfahrenden Vorderfahrzeug orientiert. Erfindungsgemäß wird zur selbsttätigen, dynamisch geregelten Querführung des Folgefahrzeugs die Relativabweichung ($\Delta$x, $\Delta$y) zwischen einem vorgegebenen Frontreferenzpunkt des Folgefahrzeugs und einem Heckreferenzpunkt des Vorderfahrzeugs mittels einer Sensorik des Folgefahrzeugs erfasst wird. Das Heck des Vorderfahrzeugs kann hier gegebenenfalls auch das Heck eines vorausfahrenden Anhängers oder Aufliegers sein.

Aus der erfassten Relativabweichung ($\Delta$x, $\Delta$y) wird ein Soll-Lenkwinkel ($\delta_{soll}$) für gelenkte Vorderräder des Folgefahrzeugs berechnet, dergestalt, dass bei diesem Soll-Lenkwinkel ($\delta_{soll}$) das Folgefahrzeug dem Vorderfahrzeug in dessen Spur folgt. Mittels des berechneten Soll-Lenkwinkels ($\delta_{soll}$) werden dann mit einer zugeordneten Stellgröße die gelenkten Vorderräder des Folgefahrzeugs auf diesen Soll-Lenkwinkel ($\delta_{soll}$) für eine spurgebundene Folgefahrt eingestellt.

Damit wird ein einfaches Verfahren für eine automatische Querführung eines Folgefahrzeugs in einem Platoon vorgeschlagen, das in einer einfachen Ausführungsform autark im Folgefahrzeug realisierbar ist. Eine Fahrzeug-zu-Fahrzeug-Kommunikation zwischen einem vorausfahrenden Vorderfahrzeug und dem Folgefahrzeug ist hier bei einer einfachen Verfahrensführung bezüglich der automatisierten Querführung nicht zwingend erforderlich.

Der Heckreferenzpunkt des Vorderfahrzeugs wird als Heckmitte mit der Sensorik als Frontsensorik bezüglich eines mittigen Front-Referenzpunkt des Folgefahrzeugs erfasst. Die damit bezüglich der aktuellen Geradaus-Fahrrichtung des Folgefahrzeugs erfasste Relativabweichung als Längsabweichung ($\Delta$x) und Querabweichung ($\Delta$y) wird auf einen Hinterachs-Referenzpunkt an der Hinterachsmitte des Folgefahrzeugs transformiert ($\Delta$x + e; $\Delta$y).

Die frontseitige Sensorik des Folgefahrzeugs kann zur Erfassung der Relativabweichung des Vorderfahrzeugs wenigstens einen Radarsensor und/oder wenigstens einen Kamerasensor und/oder wenigstens einen Lidarsensor oder gegebenenfalls weitere geeignete Sensoren aufweisen mit einer nachgeordneten Auswerte- und Recheneinheit.

Ein wesentlicher Aspekt des erfindungsgemäßen Verfahrens ist die Bestimmung und Vorgabe des Soll-Lenkwinkels ($\delta_{soll}$). Dazu wird ein Radius (R) eines zu fahrenden Kreisbogensegments durch den Hinterachs-Referenzpunkt des Folgefahrzeugs und dem Heck-Referenzpunkt bzw. Hinterachsreferenzpunkt des Vorderfahrzeugs mit einem Kreismittelpunkt als Geradenschnittpunkt der beiden Hinterachs-Verlängerungen bzw. auf einer Geraden entlang der Hinterachse des Folgefahrzeugs aus den geometrischen Gegebenheiten berechnet mit

$$R = \frac{\Delta l^2 + \Delta y^2}{2 \Delta y},$$

wobei $\Delta l = \Delta x + e$.

Dabei ist sowohl der Hinterachs-Referenzpunkt bezüglich der Geradeaus-Fahrtrichtung des Folgefahrzeugs als auch der Heck-Referenzpunkt bzw. Hinterachs-Referenzpunkt bezüglich der Geradeaus-Fahrtrichtung des Vorderfahrzeugs jeweils ein Tangentialpunkt des Kreisbogensegments.

Weiter wird aus dem Radius (R) des Kreisbogensegments eine Krümmung des zu fahrenden Sollkurses ($K_{soll}$) berechnet mit

$$K_{soll} = \frac{1}{R} = \frac{2 \Delta y}{\Delta l^1 + \Delta y^2}.$$

Aus dieser ermittelten Soll-Krümmung ($K_{soll}$) kann dann ein zu fahrender und an den Vorderrädern des Folgefahrzeugs einzustellender Soll-Lenkwinkel ($\delta_{soll}$) berechnet und abgeleitet werden.

Bis zu einer vorgebbaren, relativ geringen Geschwindigkeit mit einem vorgebbaren Geschwindigkeitsschwellwert von ca. 20 km/h bis 40 km/h wird der Soll-Lenkwinkel ($\delta_{soll}$) aus der Soll-Krümmung ($K_{soll}$) berechnet mit

$$\delta_{soll} = atan\,(r \cdot K_{soll})$$

D.h. bei einer relativ geringen Fahrgeschwindigkeit kann der Soll-Lenkwinkel ($\Delta_{soll}$) unter Vernachlässigung von Schräglaufwinkeln an den Rädern nach der Beziehung von Ackermann berechnet werden, wobei r der Abstand zwischen Vorderachse und Hinterachse des Folgefahrzeugs ist. Dieser berechnete Soll-Lenkwinkel ($\delta_{soll}$) wird mittels eines Lenkaktuators den gelenkten Vorderrädern des Folgefahrzeugs aufgeprägt. Je nach Art des Folgefahrzeugs und der aktuellen Gegebenheiten kann diese Berechnung nach Ackermann bis zu einem Geschwindigkeitswert von bis zu 40 km/h mit guten Regeleigenschaften angewendet werden.

Bei demgegenüber darüber liegenden höheren Geschwindigkeiten sind für ein gutes Regelergebnis die Schräglaufwinkel nicht mehr vernachlässigbar. Daher wird für höhere Fahrzeuggeschwindigkeiten die Gierrate $\dot{\Psi}$ des Folgefahrzeugs als unterlagerte Regelung zur Einstellung der Sollkrümmung $\delta_{soll}$ verwendet. Unter Vernachlässigung des Schwimmwinkels ergibt sich die gefahrene Krümmung aus Gierrate $\dot{\Psi}$ geteilt durch die Fahrzeuggeschwindigkeit (v). D.h. mit anderen Worten, dass der Soll-Lenkwinkel ($\delta_{soll}$), vorzugsweise bei demgegenüber höheren Geschwindigkeiten, insbesondere über einer vorgegebenen Geschwindigkeitsschwelle aus der berechneten Soll-Krümmung ($K_{soll}$), welche mit einer unterlagerten Regelung unter Berücksichtigung einer erfassten aktuellen Gierrate ($\dot{\Psi}_{ist}$) und einer erfassten aktuellen Geschwindigkeit ($V_{ist}$) des Folgefahrzeugs modifiziert ist, berechnet wird (Regelgesetz für einen proportionalen Krümmungsregler) mit

$$\delta_{soll} = F_p \cdot \left(K_{soll} - \frac{\dot{\psi}_{ist}}{v_{ist}}\right)$$

wobei $F_p$ ein Proportionalfaktor ist. Der berechnete Soll-Lenkwinkel $\delta_{soll}$ wird dann mittels eines Lenkaktuators den gelenkten Vorderrädern des Vorderfahrzeugs aufgeprägt.

Der Proportionalitätsfaktor ($F_p$) ist variabel in Abhängigkeit von aktuellen Fahrzeugdaten, beispielsweise von einer aktuellen Fahrzeugmasse bzw. Beladung und/oder von aktuellen Fahrdaten, wie beispielsweise einer Fahrgeschwindigkeit und/oder von Relativabweichungen zu bestimmten. Insbesondere soll der Proportionalitätsfaktor ($F_p$) mit betragsmäßig größeren Quer-Relativabweichungen ($\Delta y$) kleiner eingestellt werden.

Bei einer bevorzugten Weiterbildung des Verfahrens sollen das Vorderfahrzeug und das Folgefahrzeug mit einer Einrichtung zur drahtlosen Fahrzeug-zu-Fahrzeug-Kommunikation ausgestattet sein, mit der der aktuelle Lenkwinkel des Vorderfahrzeugs an das Folgefahrzeug zur Verwendung und Berücksichtigung in dessen Querführungsregelung übertragen wird. Mit dem übertragenen aktuellen Lenkwinkel des Vorderfahrzeugs ist eine Vorsteuerung bezüglich des Soll-Lenkwinkels ($\delta_{soll}$) des Folgefahrzeugs möglich, wodurch die Folgespurregelung des Folgefahrzeugs genauer und stabiler durchgeführt werden kann. Als erweiterter Ansatz für den Soll-Lenkwinkel kann folgende Beziehung verwendet werden:

$$\delta_{soll} = F_p \cdot \left(K_{soll} - \frac{\dot{\psi}_{ist}}{v_{ist}}\right) + \delta_{istVFZ} \cdot (t - \Delta t)$$

wobei der aktuelle Soll-Lenkwinkel ($\delta_{ist}VFZ$) des Vorderfahrzeugs um eine zu durchfahrende Zeitlücke $\Delta t$ versetzt ist. Besonders bevorzugt wird der für die Regelung erforderliche Soll-Lenkwinkel dem vorgesteuerten Lenkwinkel, vorzugsweise additiv, überlagert.

Der Ausdruck $\delta_{ist}VFZ\,(t - \Delta t)$ bezeichnet den übertragenden, zwischengespeicherten und um die Zeitlücke $\Delta t$ verzögerten Lenkwinkel des Vorderfahrzeugs, da das Folgefahrzeug erst nach der Zeitlücke $\Delta t$ den vorher betrachteten Ort des Vorderfahrzeugs durchfährt.

Diese Zeitlücke kann aufgrund der geometrischen Gegebenheiten vereinfacht berechnet werden mit

$$\Delta t = \frac{a + \sqrt{\Delta x^2 + \Delta y^2 + b}}{v},$$

wobei a der Abstand zwischen dem Sensorreferenzpunkt und der Vorderachsmitte des Folgefahrzeugs und b der Abstand zwischen der Heckmitte und der Vorderachsmitte des Vorderfahrzeugs ist.

Mit den vorstehenden Maßnahmen wird die Robustheit der Folgespurregelung insbesondere bei Gegenwart von Störeinflüssen, wie Spurrillen, Fahrbahnquerneigungswechseln oder Seitenwind deutlich verbessert.

Der Lenkaktuator im Folgefahrzeug zur Einstellung des Sollwinkels ($\delta_{soll}$) hat aufgrund seiner Dynamik einen Einfluss auf die Regelgüte des Gesamtsystems. In einer ergänzenden Weiterbildung wird daher vorgeschlagen, das dynamische Übertragungsverhalten eines Lenkaktuators durch Verwendung einer Übertragungsfunktion mit zu berücksichtigen.

Das Übertragungsverhalten des Lenkaktuators kann näherungsweise mit einer Übertragungsfunktion

$$G(s) = \frac{1}{T_A s + 1}$$

beschrieben werden mit $T_A$ als Zeitkonstante des Lenkaktuators und s als komplexe Variable, die hier als komplexe Frequenz eine Frequenz im sogenannten Frequenzbereich bezeichnet. Im Frequenzbereich kann das Übertragungsverhalten in Form von Polynomfunktionen mit Nenner und Zähler dargestellt werden. Der Zähler enthält Nullstellen, der Nenner enthält Pole (z.B. Resonanzfrequenz: ist s = Resonanzfrequenz wird der Nenner = 0 und der gesamte Bruch geht gegen unendlich), wobei der Führungsübertragungsfunktion des Regelkreises $Z(s)/N(s)$

$$G_2(s) = \frac{Z(s)}{N(s)} \cdot \frac{1}{T_A s + 1}$$

eine dominante, langsame Polstelle $1/T_A s + 1$ hinzugefügt wird. $Z(s)$ ist hierbei ein Platzhalter für ein beliebiges Zählerpolynom, während $N(s)$ ein Platzhalter für ein beliebiges Nennerpolynom ist. Durch die Hinzufügung einer langsamen Polstelle zu der Übertragungsfunktion des offenen Regelkreises sinkt die Phasenreserve des Systems, wodurch bei Anregung des Systems die Gefahr von Schleifenverstärkungen und Instabilitäten, wie z.B. durch Phasenverschiebung bedingten Mitkopplungen (Schleifenverstärkungen) besteht. Dies kann beispielsweise bei einer Anregung der geregelten Strecke mit einer periodischen Querbewegung mit den beim Platooning zu erwartenden geringen Anregungsfrequenzen der Fall sein.

Dementsprechend ist es sinnvoll, durch eine geeignete Anpassung des Frequenzgangs die Phasenreserve des Systems zu erhöhen. Dies kann durch eine Dominatpolkompensation erfolgen, wobei dem System eine zusätzliche Nullstelle aufgeprägt wird, die den dominanten Pol der Aktuatordynamik kompensiert. Dies wird erreicht, indem ein zusätzliches Übertragungsglied (sog. Lag-Kompensator) mit $T_f \ll T_a$ eingeführt wird, dessen Nullstelle den dominanten Pol kompensiert und die Phasenreserve des Systems erhöht. Durch die Kompensation ist das System weniger träge und dementsprechend ein Aufschaukeln durch gegenphasige Anregung weniger wahrscheinlich. Als resultierende Übertragungsfunktion des offenen Regelkreises ergibt sich damit

$$G_3(s) = \frac{Z(s)}{N(s)} \cdot \frac{1}{T_A s + 1} \cdot \frac{T_A s + 1}{(t_f s + 1)^n}$$

die Ordnung n hat dabei einen Wert >1.

Mit Anspruch 11 ist zudem ein Fahrzeug, insbesondere ein Nutzfahrzeug zur Durchführung eines der vorstehend erläuterten Verfahren beansprucht.

In der einzigen Figur sind die in den vorstehenden Ausführungen und Patentansprüchen verwendeten geometrischen Gegebenheiten dargestellt.

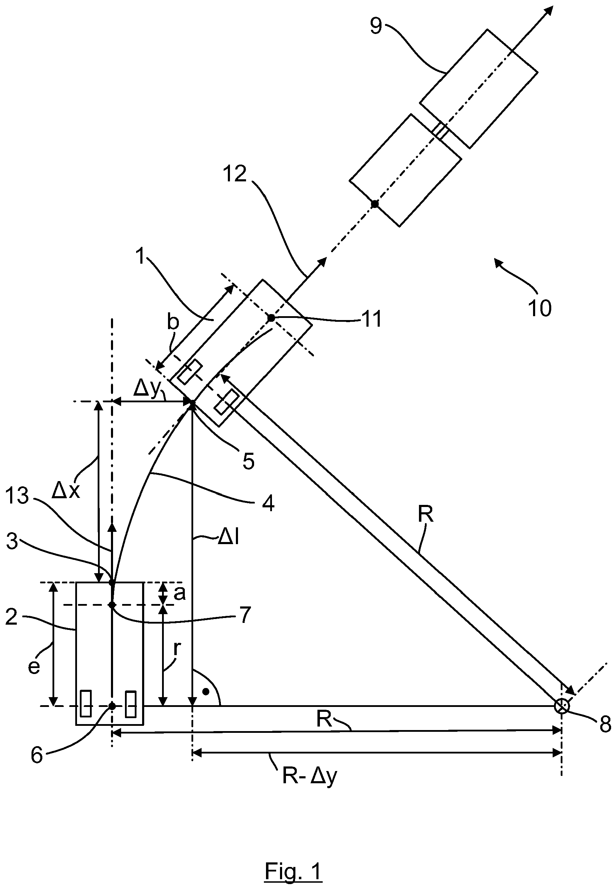

In Figur 1 ist schematisch eine Draufsicht auf drei Fahrzeuge 9, 1, 2 dargestellt, die in einem gekoppelten Fahrzeugverband mit geringem Abstand, in einem Platoon 10 hintereinanderfahren.

Das vorausfahrende Fahrzeug, hierin Gespann, ist ein Führungs-fahrzeug 9, das Geschwindigkeit und Richtung vorgibt, hinter dem zwei Folgefahrzeuge 1, 2 mit geringem Abstand spurgeführt folgen. Beispielhaft wird hier das Folgefahrzeug 2 betrachtet, das sich an dem vorausfahrenden Vorderfahrzeug 1 orientiert und diesem mit einer selbsttätig, dynamisch geregelten Querführung spurgebunden folgt. Das Vorderfahrzeug 1 hat bereits eine leichte Rechtskurve durchführen und fährt wieder in seine Geradausfahrrichtung 12. Das Folgefahrzeug 2 soll mit einem zu ermittelnden Soll-Lenkwinkel entsprechend dem Kreisbogensemgent 4 der Spur des Vorderfahrzeugs 1 folgen.

Entsprechend der dargestellten geometrischen Gegebenheiten und der vorstehend erläuterten Formeln und Gleichungen werden mittels einer Sensorik an einem Sensorreferenzpunkt 3 an der Frontmitte des Folgefahrzeugs 2 eine Längsabweichung $\Delta x$ und eine Querabweichung $\Delta y$ bezüglich einer Heckmitte des Vorderfahrzeugs 1 entsprechend einem Heckreferenzpunkt 5 erfasst, wobei die entsprechenden Abweichungen $\Delta x$, $\Delta y$ auf die Geradausrichtung 13 des Folgefahrzeugs 2 bezogen sind. Der Kreismittelpunkt 8 des Kreisbogensegments 4 liegt auf dem Schnittpunkt der Geraden als Verlängerungen der beiden Hinterachsen des Vorderfahrzeugs 1 und des Folgefahrzeugs 2. Der bei der Berechnung weiter verwendete Abstand Δl ergibt sich ersichtlich als Summe der Längsabweichung Δx und dem Abstand e der Sensorreferenzstelle 3 zur Mitte der Hinterachse 6 des Folgefahrzeugs 2.

Weiter sind in den vorstehenden Gleichungen, wie in Figur 1 dargestellt, der Abstand a zwischen der Mitte der Vorderachse 7 des Folgefahrzeugs 2 und der Sensorreferenzstelle 3 verwendet sowie der Abstand b zwischen Mitte der Vorderachse 11 des Vorderfahrzeugs 1 zu dessen Heckmitte 5. Zudem ist bei der Berechnung des Lenksollwinkels $\delta_{soll}$ für kleine Geschwindigkeiten in der Beziehung nach Ackermann der Radstand r als Abstand Mitte Vorderachse 7 zur Mitte Hinterachse 6 des Folgefahrzeugs 2 berücksichtigt.

Damit lassen sich die in den Formeln und Gleichungen verwendeten Symbole den geometrischen Gegebenheiten wie in Figur 1 dargestellt zuordnen.

Bezugszeichenliste

| 1 | Vorderfahrzeug |
| 2 | Folgefahrzeug |
| 3 | Sensorreferenzpunkt an der Frontmitte des Folgefahrzeugs |
| 4 | Kreisbogensegment |
| 5 | Heckmitte des Vorderfahrzeugs als Heck-Referenzpunkt |
| 6 | Mitte Hinterachse des Folgefahrzeugs |
| 7 | Mitte Vorderachse des Folgefahrzeugs |
| 8 | Kreismittelpunkt des Kreisbogensegments |
| 9 | Führungsfahrzeug |
| 10 | Platoon |
| 11 | Mitte Vorderachse des Vorderfahrzeugs |
| 12 | Geradaus-Fahrtrichtung Vorderfahrzeug |
| 13 | Geradaus-Fahrtrichtung Folgefahrzeug |
| Δx | Relativabweichung der Heckmitte des Vorderfahrzeugs zur Geradaus-Fahrtrichtung des Folgefahrzeugs |
| Δy | Relativabweichung der Heckmitte des Vorderfahrzeugs quer zur Geradaus-Fahrtrichtung des Folgefahrzeugs |
| R | Radius des Kreisbogensegments |
| a | Abstand Mitte der Vorderachse des Folgefahrzeugs zur Sensorreferenzstelle |
| b | Abstand Mitte der Vorderachse des Vorderfahrzeugs zu seiner Heck-Mitte |
| e | Abstand Sensorreferenzstelle zur Mitte Hinterachse des Folgefahrzeugs |
| r | Abstand Mitte Vorderachse zu Mitte Hinterachse des Folgefahrzeugs |
| Δl | Abstand Mitte Heck des Vorderfahrzeugs zu Mitte Hinterachse des Folgefahrzeugs bezogen auf dessen Fahrtrichtung |

**Patentansprüche**

1. Verfahren zur Folgeregelung in Querrichtung eines Fahrzeugs (2) innerhalb eines Platoons (10), mit einem vorausfahrenden Führungsfahrzeug (9), das Geschwindigkeit und Richtung vorgibt, und einem oder mehreren mit Abstand folgenden Folgefahrzeugen (1, 2), wobei sich ein Folgefahrzeug (2) am jeweils vorausfahrenden Vorderfahrzeug (1) orientiert, wobei zur selbsttätigen, dynamisch geregelten Querführung des Folgefahrzeugs (2) die Relativabweichung (Δx, Δy) zwischen einem vorgegebenen Frontreferenzpunkt (3) des Folgefahrzeugs (2) und einem Heckreferenzpunkt (5) des Vorderfahrzeugs (1) mittels einer Sensorik des Folgefahrzeugs (2) erfasst wird, wobei aus der erfassten Relativabweichung (Δx, Δy) ein Soll-Lenkwinkel ($\delta_{soll}$) für gelenkte Vorderräder des Folgefahrzeugs (2) berechnet wird, dergestalt dass bei Einstellung dieses Soll-Lenkwinkels ($\delta_{soll}$) das Folgefahrzeug (2) dem Vorderfahrzeug (1) in dessen Spurfolgt, und wobei mittels des berechneten Soll-Lenkwinkels ($\delta_{soll}$) mit einer zugeordneten Stellgröße die gelenkten Vorderräder des Folgefahrzeugs (2) auf diesen Soll-Lenkwinkel ($\delta_{soll}$) für eine spurgebundene Folgefahrt eingestellt werden, wobei der Heckreferenzpunkt (5) des Vorderfahrzeugs als Heckmitte mit einer frontseitigen Sensorik bezüglich eines mittigen Frontreferenzpunkts (3) des Folgefahrzeugs (2) erfasst wird und die damit bezüglich der aktuellen Geradeaus-Fahrtrichtung (13) des Folgefahrzeugs (2) erfasste Relativabweichung, als Längsabweichung (Δx) und Querabweichung (Δy), auf einen Hinterachs-Referenzpunkt (6) an der Hinterachsmitte des Folgefahrzeugs (2) transformiert (Δx + e; Δy) wird, wobei zur Bestimmung und Vorgabe des Soll-Lenkwinkels ($\delta_{soll}$) ein Radius (R) eines zu fahrenden Kreisbogensegments (4) durch den Hinterachsreferenzpunkt (6) des Folgefahrzeugs (2) und den Heck-Referenzpunkt (5) und/oder Hinterachsreferenzpunkt des Vorderfahrzeugs (1) mit einem Kreismittelpunkt (8) als Geradenschnittpunkt der beiden Hinterachs-Verlängerungen und/oder auf einer Geraden entlang der Hinterachse des Folgefahrzeugs aus den geometrischen Gegebenheiten berechnet wird mit

$$R = \frac{\Delta l^2 + \Delta y^2}{2\Delta y}$$

wobei

$$\Delta l = \Delta x + e$$

ist, und dass aus dem Radius (R) des Kreisbogensegments (4) eine Krümmung des zu fahrenden Sollkurses ($K_{soll}$) berechnet wird mit

$$K_{soll} = \frac{1}{R} = \frac{2\Delta y}{\Delta l^2 + \Delta y^2}$$

und
dass aus der Krümmung des zu fahrenden Sollkurses ($K_{soll}$) ein Soll-Lenkwinkel ($\delta_{soll}$) berechnet wird, **dadurch gekennzeichnet,**
**dass** bis zu einer vorgebbaren Geschwindigkeit mit einem vorgebbaren Geschwindigkeitsschwellwert von 20 km/h bis 40 km/h der Soll-Lenkwinkel ($\delta_{soll}$) aus der Soll-Krümmung ($K_{soll}$) berechnet wird mit

$$\delta_{soll} = \text{atan} \, (r \cdot K_{soll})$$

wobei r der Abstand zwischen Vorderachse (7) und Hinterachse (6) des Folgefahrzeugs (2) ist, und **dass** der berechnete Soll-Lenkwinkel ($\delta_{soll}$) den gelenkten Vorderrädern des Folgefahrzeugs (2) mittels eines Lenkaktuators aufgeprägt wird, und dass der Soll-Lenkwinkel ($\delta_{soll}$), vorzugsweise bei demgegenüber höheren Geschwindigkeiten, oberhalb einer Mindestgeschwindigkeit mit der Regeldifferenz aus Soll- und Ist-Krümmung eingeregelt wird, wobei sich die Ist-Krümmung aus der Gierrate und der Geschwindigkeit berechnet, mit

$$\delta_{soll} = F_p \cdot \left( K_{soll} - \frac{\dot{\psi}_{ist}}{v_{ist}} \right)$$

wobei $F_p$ ein Proportionalfaktor ist, und **dass** der berechnete Soll-Lenkwinkel ($\delta_{soll}$) den gelenkten Vorderrädern des Folgefahrzeugs (2) mittels eines Lenkaktuators aufgeprägt wird.

2. Verfahren nach Anspruch 1, **dadurch gekennzeichnet, dass** die Sensorik des Folgefahrzeugs (2) wenigstens einen Radarsensor und/oder wenigstens einen Kamerasensor und/oder wenigstens einen Lidarsensor mit einer nachgeordneten Auswerte- und Recheneinheit aufweist.

3. Verfahren nach Anspruch 1 oder 2, **dadurch gekennzeichnet, dass** der Proportionalitätsfaktor ($F_p$) variabel in Abhängigkeit von aktuellen Fahrzeugdaten, insbesondere einer aktuellen Fahrzeugmasse und/oder einer Beladung und/oder einer aktuellen Fahrzeuggeschwindigkeit ($V_{ist}$) und/oder einem aktuellen Längs-Relativabstand ($\Delta x$) und/oder einem aktuellen Quer-Relativabstand ($\Delta y$), eingestellt wird, wobei vorzugsweise der Proportionalitätsfaktor ($F_p$) mit betragsmäßig größerem Quer-Relativabstand ($\Delta y$) kleiner eingestellt wird.

4. Verfahren nach Anspruch 1, 2 oder 3, **dadurch gekennzeichnet, dass** das Vorderfahrzeug (1) und das Folgefahrzeug (2) mit einer Einrichtung zur drahtlosen Fahrzeug-zu-Fahrzeug-Kommunikation ausgestattet sind, mit der der aktuelle Lenkwinkel des Vorderfahrzeugs (1) an das Folgefahrzeug (2) zur Verwendung und Berücksichtigung in dessen Querführungsregelung übertragen wird, vorzugsweise mit einem erweiterten Ansatz für den Soll-Lenkwinkel ($\delta_{soll}$) mit

$$\delta_{soll} = F_p \cdot \left( K_{soll} - \frac{\dot{\psi}_{ist}}{v_{ist}} \right) + \delta_{istVFZ} \cdot (t - \Delta t),$$

wobei der aktuelle Soll-Lenkwinkel ($\delta_{ist}VFZ$) des Vorderfahrzeugs (1) um eine zu durchfahrende Zeitlücke ($\Delta t$) versetzt als Vorsteuerung durch Addition verwendet ist und

$$\delta_{istVFZ} \, (t - \Delta t)$$

den übertragenen zwischengespeicherten und um die Zeitlücke $\Delta t$ verzögerten Lenkwinkel des Vorderfahrzeugs bezeichnet, und
wobei die Zeitlücke $\Delta t$ aufgrund der geometrischen Gegebenheiten vereinfacht berechenbar ist mit

$$\Delta t = \frac{a + \sqrt{\Delta x^2 + \Delta y^2 + b}}{v}$$

wobei a der Abstand zwischen dem Sensorreferenzpunkt (3) und der Vorderachsmitte (7) des Folgefahrzeugs (2) und b der Abstand zwischen der Heckmitte (5) und der Vorderachsmitte (11) des Vorderfahrzeugs (1) ist.

5. Verfahren nach einem der Ansprüche 1 bis 4, **dadurch gekennzeichnet, dass** das dynamische Übertragungsverhalten eines Lenkaktuators zur Einstellung des Soll-Lenkwinkels ($\delta_{soll}$) im Regelalgorithmus der Querführungs-Regelung durch Verwendung einer Übertragungsfunktion mit berücksichtigt wird.

6. Verfahren nach Anspruch 5, **dadurch gekennzeichnet,**
**dass** das Übertragungsverhalten des Lenkaktuators näherungsweise mit einer Übertragungsfunktion

$$G(s) = \frac{1}{T_A s + 1}$$

beschrieben wird, mit $T_A$ als Zeitkonstante des Lenkaktuators und s als komplexer Frequenz, wobei der Führungsübertragungsfunktion des Regelkreises $Z(s)/N(s)$

$$G_2(\text{s}) = \frac{Z(s)}{N(s)} \cdot \frac{T_A s + 1}{T_f s + 1}$$

eine dominante, langsame Polstelle $1/T_A s + 1$ hinzugefügt wird, die die Phasenreserve des Systems verringert, weshalb ein zusätzliches Übertragungsglied mit $T_f \ll T_a$ eingeführt wird, dessen Nullstelle den dominanten Pol kompensiert und die Phasenreserve des Systems erhöht, so dass sich folgende resultierende Übertragungsfunktion ergibt:

$$G_3(\text{s}) = \frac{Z(s)}{N(s)} \cdot \frac{1}{T_A s + 1} \cdot \frac{T_A s + 1}{(T_A s + 1)^n}$$

mit n > 1.

7. Fahrzeug, insbesondere Nutzfahrzeug, zur Durchführung eines Verfahrens nach einem der vorhergehenden Ansprüche.

**Claims**

1. Method for follow control in the lateral direction of a vehicle (2) within a platoon (10) comprising a lead vehicle (9) which is travelling in front and prespecifies speed and direction and one or more following vehicles (1, 2) which follow at a distance, wherein a following vehicle (2) is oriented towards the lead vehicle (1) which is respectively travelling in front, wherein, for automatic, dynamically controlled lateral guidance of the following vehicle (2), the relative deviation ($\Delta x$, $\Delta y$) between a prespecified front reference point (3) of the following vehicle (2) and a rear reference point (5) of the lead vehicle (1) is detected by means of a sensor system of the following vehicle (2), wherein a setpoint steering angle ($\delta_{set}$) for steered front wheels of the following vehicle (2) is calculated from the detected relative deviation ($\Delta x$, $\Delta y$) in such a way that when this setpoint steering angle ($\delta_{set}$) is set, the following vehicle (2) follows in the tracks of the lead vehicle (1), and wherein, by means of the calculated setpoint steering angle ($\delta_{set}$) with an associated actuating variable, the steered front wheels of the following vehicle (2) are set to the said setpoint steering angle ($\delta_{set}$) for a track-bound following operation, wherein the rear reference point (5) of the lead vehicle as middle of the rear is detected with a front-side sensor system with respect to a central front reference point (3) of the following vehicle (2) and the relative deviation which is detected by said front-side sensor system with respect to the current straight-ahead direction of travel (13) of the following vehicle (2), as longitudinal deviation ($\Delta x$) and lateral deviation ($\Delta y$), is transformed ($\Delta x + e$; $\Delta y$) into a rear axle reference point (6) at the centre of the rear axle of the following vehicle (2), wherein, for the purpose of determining and prespecifying the setpoint steering angle ($\delta_{set}$), a radius (R) of a segment of an arc of a circle (4) which is to be driven along is calculated by the rear axle reference point (6) of the following vehicle (2) and the rear reference point (5) and/or rear axle reference point of the lead vehicle (1) with a centre point of a circle (8) as the straight sectional point of the two rear axle extensions and/or on a straight line along the rear axle of the following vehicle from the geometric conditions by

$$R = \frac{\Delta l^2 + \Delta y^2}{2\Delta y}$$

where

$$\Delta l = \Delta x + e$$

and
in that a curvature of the setpoint course ($K_{set}$) which is to be driven along is calculated from the radius (R) of the segment of an arc of a circle (4) by

$$K_{set} = \frac{1}{R} = \frac{2\Delta y}{\Delta l^2 + \Delta y^2}$$

and
in that a setpoint angle ($\delta_{set}$) is calculated from the curvature of the setpoint course ($K_{set}$) which is to be driven along, **characterized in that**, up to a prespecifiable speed with a prespecifiable speed threshold value of from 20 km/h to 40 km/h, the setpoint steering angle ($\delta_{set}$) is calculated from the setpoint curvature ($K_{set}$) by

$$\delta_{set} = \text{atan}\,(r \cdot K_{set})$$

where r is the distance between the front axle (7) and the rear axle (6) of the following vehicle (2), and **in that** the calculated setpoint angle ($\delta_{set}$) is impressed onto the steered front wheels of the following vehicle (2) by means of a steering actuator, and in that the setpoint steering angle ($\delta_{set}$), preferably at higher speeds, is adjusted above a minimum speed with the control difference between the setpoint curvature and the actual curvature, wherein the actual curvature is calculated from the yaw rate and the speed by

$$\delta_{set} = F_p \cdot \left( K_{set} - \frac{\psi_{act}}{v_{act}} \right)$$

where $F_p$ is a proportional factor, and **in that** the calculated setpoint steering angle ($\delta_{set}$) is impressed onto the steered front wheels of the following vehicle (2) by means of a steering actuator.

2. Method according to Claim 1, **characterized in that** the sensor system of the following vehicle (2) has at least one radar sensor and/or at least one camera sensor and/or at least one lidar sensor with a downstream evaluation and computer unit.

3. Method according to Claim 1 or 2, **characterized in that** the proportionality factor ($F_p$) is set in a variable manner depending on current vehicle data, in particular a current vehicle mass and/or a loading and/or a current vehicle speed ($v_{act}$) and/or a current longitudinal relative distance ($\Delta x$) and/or a current lateral relative distance ($\Delta y$), wherein the proportionality factor ($F_p$) is preferably set to be smaller when a lateral relative distance ($\Delta y$) is of relatively large magnitude.

4. Method according to Claim 1, 2 or 3, **characterized in that** the lead vehicle (1) and the following vehicle (2) are equipped with a device for wireless vehicle-to-vehicle communication, by way of which device the current steering angle of the lead vehicle (1) is transmitted to the following vehicle (2) for use and to be taken into account in the lateral guidance control of the said following vehicle, preferably with an extended approach for the setpoint steering angle ($\delta_{set}$) by

$$\delta_{set} = F_p \cdot \left(\kappa_{set} - \frac{\psi_{act}}{v_{act}}\right) + \delta_{actleadveh} \cdot (t-\Delta t),$$

where the current setpoint steering angle ($\delta_{actleadveh}$) of the lead vehicle (1), in a manner offset by a time interval ($\Delta t$) to be passed through, is used as pilot control by addition, and

$$\delta_{actleadveh}(t-\Delta t)$$

denotes the transmitted temporarily stored steering angle, which is delayed by the time interval $\Delta t$, of the lead vehicle, and where the time interval $\Delta t$, in a manner simplified on account of the geometric conditions, can be calculated by

$$\Delta t = \frac{a + \sqrt{\Delta x^2 + \Delta y^2 + b}}{v}$$

where a is the distance between the sensor reference point (3) and the centre of the front axle (7) of the following vehicle (2), and b is the distance between the centre of the rear (5) and the centre of the front axle (11) of the lead vehicle (1).

5. Method according to one of Claims 1 to 4, **characterized in that** the dynamic transmission behaviour of a steering actuator is also taken into account for setting the setpoint steering angle ($\delta_{set}$) in the control algorithm of the lateral guidance control by using a transmission function.

6. Method according to Claim 5, **characterized in that** the transmission behaviour of the steering actuator is approximately described by a transmission function

$$G(s) = \frac{1}{T_{A^{s+1}}}$$

where $T_A$ is a time constant of the steering actuator and s is a complex frequency, wherein the guidance transmission function of the control loop Z(s)/N(s)

$$G_2(s) = \frac{Z(s)}{N(s)} \cdot \frac{T_{A^{s+1}}}{T_{f^{s+1}}}$$

has added to it a dominant, slow pole point $1/T_{A_{S+1}}$ which reduces the phase reserve of the system, for which reason an additional transmission element where $T_f \ll T_a$ is introduced, the zero point of which additional transmission element compensates for the dominant pole and increases the phase reserve of the system, so that the following resulting transmission function is produced:

$$G_3(s) = \frac{Z(s)}{N(s)} \cdot \frac{1}{T_{A^{s+1}}} \cdot \frac{T_{A^{s+1}}}{(T_{A^{s+1}})^n}$$

where n > 1.

7. Vehicle, in particular utility vehicle, for carrying out a method according to one of the preceding claims.

**Revendications**

1. Procédé de régulation de suivi dans le sens transversal d'un véhicule (2) à l'intérieur d'un convoi (10), comprenant un véhicule de tête (9) circulant à l'avant, qui prédéfinit la vitesse et la direction, et un ou plusieurs véhicules suiveurs (1, 2) qui suivent à une certaine distance, un véhicule suiveur (2) s'oriente respectivement sur le véhicule qui précède (1), l'écart relatif ($\Delta x$, $\Delta y$) entre un point de référence avant (3) du véhicule suiveur (2) et un point de référence arrière (5) du véhicule qui précède (1) étant détecté au moyen d'un système de détection du véhicule suiveur (2) en vue du guidage transversal à régulation dynamique du véhicule suiveur (2), un angle de braquage de consigne ($\delta_{soll}$) pour des roues avant directrices du véhicule suiveur (2) étant calculé à partir de l'écart relatif ($\Delta x$, $\Delta y$) détecté, de telle sorte que lors du réglage de cet angle de braquage de consigne ($\delta_{soll}$), le véhicule suiveur (2) suit le véhicule qui précède (1) dans sa voie, et les roues avant directrices du véhicule suiveur (2) étant réglées sur cet angle de braquage de consigne ($8_{soll}$) pour une circulation en séquence liée à la voie au moyen de l'angle de braquage de consigne ($8_{soll}$) avec une grandeur de commande associée, le point de référence arrière (5) du véhicule qui précède étant détecté en tant que centre arrière avec un système de détection côté avant par rapport à un point de référence avant (3) central du véhicule suiveur (2) et l'écart relatif ainsi détecté par rapport à la direction de circulation en ligne droite (13) du véhicule suiveur (2) étant transformé ($\Delta x + e$ ; $\Delta y$) en tant qu'écart longitudinal ($\Delta x$) et écart transversal ($\Delta y$) sur un point de référence d'essieu arrière (6) au niveau du centre de l'essieu arrière du véhicule suiveur (2), l'angle de braquage de consigne ($8_{soll}$) étant déterminé et prédéfini en calculant un rayon (R) d'un segment d'arc de cercle (4) à franchir par le point de référence d'essieu arrière (6) du véhicule suiveur (2) et le point de référence arrière (5) et/ou le point de référence d'essieu arrière du véhicule qui précède (1), avec un centre de cercle (8) formé par le point d'intersection de droites des prolongements des deux essieux arrière et/ou sur une droite le long de l'essieu arrière du véhicule suiveur, à partir des conditions géométriques par

$$R = \frac{\Delta l^2 + \Delta y^2}{2\Delta y}$$

où

$$\Delta l = \Delta x + e$$

et

en ce qu'une courbure du parcours de consigne ($K_{soll}$) à franchir est calculée à partir du rayon (R) segment d'arc de cercle (4) par

$$K_{soll} = \frac{1}{R} = \frac{2\Delta y}{\Delta l^2 + \Delta y^2}$$

et

en ce qu'un angle de braquage de consigne ($\delta_{soll}$) est calculé à partir de la courbure du parcours de consigne ($K_{soll}$) à franchir,

**caractérisé en ce que**
jusqu'à une vitesse pouvant être prédéfinie, avec un seuil de vitesse pouvant être prédéfini de 20 km/h à 40 km/h, l'angle de braquage de consigne ($\delta_{soll}$) est calculé à partir de la courbure de consigne ($K_{soll}$) par

$$\delta_{soll} = atan(r \cdot K_{soll})$$

r désignant ici l'écart entre l'essieu avant (7) et l'essieu arrière (6) du véhicule suiveur (2) et
**en ce que** l'angle de braquage de consigne ($8_{soll}$) calculé des roues avant directrices du véhicule suiveur (2) est appliqué au moyen d'un actionneur de direction, et **en ce que** l'angle de braquage de consigne ($8_{soll}$) est régulé, de préférence aux vitesses en revanche plus élevées, au-dessus d'une vitesse minimale, avec la différence de régulation résultant de la courbure réelle et de consigne, la courbure réelle se calculant à partir du taux de lacet et de la vitesse, par

$$\delta_{soll} = F_p \cdot \left(K_{soll} - \frac{\Psi_{ist}}{v_{ist}}\right)$$

où $F_p$ désigne un facteur proportionnel et
**en ce que** l'angle de braquage de consigne ($8_{soll}$) calculé des roues avant directrices du véhicule suiveur (2) est appliqué au moyen d'un actionneur de direction.

2. Procédé selon la revendication 1, **caractérisé en ce que** le système de détection du véhicule suiveur (2) possède au moins un capteur radar et/ou au moins un capteur à caméra et/ou au moins un capteur lidar en aval duquel est disposée une unité d'interprétation et de calcul.

3. Procédé selon la revendication 1 ou 2, **caractérisé en ce que** le facteur proportionnel ($F_p$) est réglé de manière variable en fonction de données de véhicule actuelles, notamment d'une masse de véhicule et/ou d'un chargement et/ou d'une vitesse de véhicule actuelle ($V_{ist}$) et/ou d'un écart relatif longitudinal ($\Delta x$) actuel et/ou d'un écart relatif transversal ($\Delta y$) actuel, le facteur proportionnel ($F_p$) étant de préférence réglé plus petit avec une valeur absolue plus élevée de l'écart relatif transversal ($\Delta y$).

4. Procédé selon la revendication 1, 2 ou 3, **caractérisé en ce que** le véhicule qui précède (1) et le véhicule suiveur (2) sont équipés d'un dispositif de communication sans fil de véhicule à véhicule, avec lequel l'angle de braquage actuel du véhicule qui précède (1) est transmis au véhicule suiveur (2) en vue d'être utilisé et pris en compte dans sa régulation de guidage transversal, de préférence avec une approche élargie pour l'angle de braquage de consigne ($\delta_{soll}$) avec

$$\delta_{soll} = F_p \cdot \left(K_{soll} - \frac{\psi_{ist}}{v_{ist}}\right) + \delta_{istVFZ} \cdot (t - \Delta t),$$

l'angle de braquage de consigne actuel ($\delta_{ist}$VFZ) du véhicule qui précède (1), décalé d'un intervalle de temps ($\Delta t$) de passage, étant utilisé comme commande pilote par addition et

$$\delta_{istVFZ} \cdot (t - \Delta t)$$

désignant l'angle de braquage du véhicule qui précède, mémorisé temporairement et retardé de l'intervalle de temps $\Delta t$, et
l'intervalle de temps $\Delta t$ pouvant être calculé de manière simplifiée sur la base des conditions géométriques par

$$\Delta t = \frac{a + \sqrt{\Delta x^2 + \Delta y^2 + b}}{v}$$

où a désigne l'écart entre le point de référence de capteur (3) et le centre d'essieu avant (7) du véhicule suiveur (2) et b l'écart entre le centre de l'arrière (5) et le centre d'essieu avant (11) du véhicule qui précède (1).

5. Procédé selon l'une des revendications 1 à 4, **caractérisé en ce que** le comportement de transfert dynamique d'un actionneur de direction servant au réglage de l'angle de braquage de consigne ($\delta_{soll}$) est également pris en compte dans l'algorithme de régulation de la régulation de guidage latéral en utilisant une fonction de transfert.

6. Procédé selon la revendication 5, **caractérisé en ce que**
le comportement de transfert de l'actionneur de direction est décrit approximativement avec une fonction de transfert

$$G(s) = \frac{1}{T_A s + 1}$$

$T_A$ étant une constante de temps de l'actionneur de direction et s une fréquence complexe, un pôle dominant lent $1/T_A s + 1$ étant ajouté à la fonction de transfert de guidage du circuit de régulation Z(s)/N(s)

$$G_2(s) = \frac{Z(s)}{N(s)} \cdot \frac{T_A s + 1}{T_f s + 1}$$

lequel réduit la réserve de phase du système, ce pourquoi un élément de transfert supplémentaire étant introduit avec $T_{f \ll} T_a$, dont le point zéro compense le pôle dominant et augmente la réserve de phase du système, de sorte que la fonction de transfert résultante suivante est obtenue :

$$G_3(s) = \frac{Z(s)}{N(s)} \cdot \frac{1}{T_A s + 1} \cdot \frac{T_A s + 1}{(T_A s + 1)^n}$$

avec n > 1.

7. Véhicule, notamment véhicule utilitaire, destiné à mettre en œuvre un procédé selon l'une des revendications précédentes.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10109052 A1
- DE 102005055371
- DE 102013226532 A1
- EP 0762364 B1
- DE 10109046 A1